# FASCICULE DE BREVET EUROPEEN

(11) **EP 4 460 431 B1**
(45) Date de publication et mention de la délivrance du brevet: **22.07.2026**
(21) Numéro de dépôt: 22826133.5
(22) Date de dépôt: 21.11.2022
(51) Int. Cl.: B60K 6/387, B60K 6/442, B60K 6/547, B60W 10/113, F16D 13/38, B60W 10/02, B60W 10/06, B60W 10/08, B60W 10/11, B60W 20/50, B60W 30/192, B60W 30/18, B60W 50/02, B60W 50/029, B60K 6/485, B60K 6/48

(54) **PROCÉDÉ DE DÉMARRAGE D'UN MOTEUR THERMIQUE D'UNE CHAINE DE TRACTION HYBRIDE DANS UNE SITUATION DYSFONCTIONNELLE**
VERFAHREN ZUM STARTEN EINES VERBRENNUNGSMOTORS EINES HYBRIDANTRIEBSSTRANGS IN EINEM FEHLFUNKTIONSZUSTAND
METHOD FOR STARTING A COMBUSTION ENGINE OF A HYBRID POWERTRAIN IN A MALFUNCTIONING STATE

(30) Priorité: 06.01.2022 FR 2200075
(43) Date de publication de la demande: 13.11.2024
(73) Titulaire: Stellantis Auto SAS, 78300 Poissy (FR)
(72) Inventeur: CLAVIER, Alain, 95250 BEAUCHAMP (FR)
(74) Mandataire: PSIP
(86) Numéro de dépôt international: PCT/FR2022/052131
(87) Numéro de publication internationale: WO 2023/131750

(56) Documents cités:
- DE-A1- 102015 112 242
- FR-A1- 3 062 358
- US-A1- 2014 311 427

## Description

La présente invention porte sur un procédé de démarrage d'un moteur thermique d'une chaîne de traction hybride dans une situation dysfonctionnelle.

De façon connue en soi, une chaîne de traction hybride de véhicule automobile peut comporter un moteur thermique et une machine électrique tournante montés sur un train de roues, notamment un train de roues avant.

La machine électrique est disposée en entrée d'une boîte de vitesses comportant au moins un embrayage de changement de rapport de vitesse. Un arbre de sortie de la boîte de vitesses est relié aux roues par l'intermédiaire d'un différentiel et d'une descente de pont.

En outre, un embrayage de connexion et de déconnexion du moteur thermique est apte à sélectivement connecter le moteur thermique à l'arbre d'entrée de la boîte de vitesses lorsque ledit embrayage est à l'état fermé et à isoler le moteur thermique par rapport à l'arbre d'entrée de la boîte de vitesses lorsque ledit embrayage est à l'état ouvert. L'isolation du moteur thermique par rapport à l'arbre d'entrée de la boîte de vitesses (et donc par rapport aux roues) est requise notamment lorsque le véhicule fonctionne dans un mode de roulage électrique pur.

L'ensemble formé par la machine électrique tournante, la boîte de vitesses, ainsi que le ou les embrayages de changement de rapport de vitesse, et l'embrayage de connexion et de déconnexion du moteur thermique pourra être intégré à l'intérieur d'un dispositif de transmission électrique constituant un composant indépendant de la chaîne de traction.

Le moteur thermique est associé à une machine électrique réversible dite "alterno-démarreur". L'alterno-démarreur pourra être accouplé avec le moteur thermique en façade accessoires par l'intermédiaire d'un dispositif de transmission à poulie et courroie. La machine électrique pourra notamment assurer le redémarrage du moteur thermique dans le cadre d'une stratégie d'arrêt et de redémarrage automatique du moteur thermique en fonction des conditions de circulation (stratégie dite STT pour "stop and start" en anglais). La machine électrique pourra participer ou non à la récupération d'énergie lors d'une phase de freinage récupératif.

Les redémarrages du moteur thermique via l'alterno-démarreur sont contraints par l'état de l'embrayage de connexion et de déconnexion du moteur thermique. Ainsi, lors d'une phase de redémarrage assurée par l'alterno-démarreur, il faut s'assurer que l'embrayage de connexion et de déconnexion du moteur thermique est à l'état ouvert. On garantit ainsi que l'alterno-démarreur entraîne uniquement le moteur thermique, sans transmission de couple aux roues pour éviter une accélération intempestive engendrant un bond en avant dans le cas où le véhicule est à l'arrêt.

Il existe toutefois des situations de vie dysfonctionnelles dans lesquelles le moteur thermique est à l'arrêt dans le cadre de la mise en œuvre de la fonction STT, alors que l'embrayage de connexion et de déconnexion du moteur thermique est bloqué à l'état fermé. Le calculateur de supervision de la transmission électrique n'autorise pas le calculateur de supervision du groupe motopropulseur à réaliser un redémarrage du moteur thermique par l'alterno-démarreur.

Le système est alors incapable de réaliser le redémarrage du moteur thermique car il existe un risque d'accélération intempestive pendant le redémarrage. Dans cette situation, la seule source d'énergie utilisable pour assurer la mobilité du véhicule est la machine électrique de la chaîne de traction. Pour des batteries de faible capacité, la mobilité électrique du véhicule pourra être assurée sur une courte durée uniquement. A la fin de cette durée, il est nécessaire de commander la coupure du groupe motopropulseur pour immobiliser le véhicule.

En outre l'état de la technique est connu des documents FR3062358A1 et US2014311427A1.

L'invention vise à remédier efficacement à cet inconvénient en proposant un procédé de pilotage d'une chaîne de traction hybride de véhicule automobile comportant:
- un moteur thermique associé à un alterno-démarreur constituant un organe de démarrage par défaut dudit moteur thermique,
- une machine électrique tournante,
- une boîte de vitesses comportant au moins un embrayage de changement de rapport de vitesse, ladite boîte de vitesses comportant un arbre d'entrée auquel est connecté mécaniquement ladite machine électrique tournante et un arbre de sortie relié à des roues du véhicule automobile, et
- un embrayage de connexion et de déconnexion du moteur thermique,
- ledit procédé comportant:
   - une étape de détection d'une situation de vie dysfonctionnelle dans laquelle le moteur thermique est à l'arrêt et l'embrayage de connexion et de déconnexion du moteur thermique est bloqué à l'état fermé,
   - une étape de reconfiguration de l'organe de démarrage en abandonnant l'alterno-démarreur au profit de la machine électrique tournante,
   - une étape d'ouverture de l'embrayage de changement de rapport de vitesse, et
   - une étape de pilotage de la machine électrique tournante pour assurer le démarrage du moteur thermique.

L'invention permet ainsi de rétablir la mobilité du véhicule en démarrant le moteur thermique alors que la chaîne de traction se trouve dans une situation de vie dysfonctionnelle du fait du blocage à l'état fermé de l'embrayage de connexion et de déconnexion du moteur thermique. L'invention permet de fournir du couple aux roues avec une autonomie correspondant à la contenance du réservoir de carburant qui est supérieure à l'autonomie en roulage électrique pur.

Selon une mise en œuvre de l'invention, l'embrayage de connexion et de déconnexion du moteur thermique est détecté comme étant bloqué à l'état fermé, lorsque le couple transmis estimé par ledit embrayage est supérieur ou égal à un seuil de couple transmis à l'état fermé.

Selon une mise en œuvre de l'invention, le seuil de couple transmis à l'état fermé est déterminé à partir d'une cartographie qui dépend d'une température estimée de l'embrayage de connexion et de déconnexion du moteur thermique et/ou d'une température d'huile de la boîte de vitesses.

Selon une mise en œuvre de l'invention, la reconfiguration de l'organe de redémarrage est demandée lorsque les conditions suivantes sont réunies:
- le moteur thermique est à l'arrêt dans le cadre d'une mise en œuvre d'une stratégie d'arrêt et de redémarrage automatique dudit moteur thermique,
- aucune demande de figeage d'un état du moteur thermique en phase d'arrêt pour un besoin de manœuvre n'a été émise,
- aucune demande d'inhibition de la stratégie d'arrêt et de redémarrage automatique du moteur thermique pour des besoins de sécurité n'a été émise,
- un calculateur de supervision d'un dispositif de transmission électrique n'autorise pas un redémarrage du moteur thermique, et
- un dispositif de frein de parking se trouve dans une position stable.

Selon une mise en œuvre de l'invention, les conditions doivent être réunies pendant une durée de confirmation calibrable.

Selon une mise en œuvre de l'invention, ledit procédé comporte une étape de vérification que l'embrayage de changement de rapport de vitesse est dans un état ouvert en vérifiant qu'un couple transmis estimé de l'embrayage de changement de rapport de vitesse est inférieur ou égal à un seuil de couple transmis à l'état ouvert.

Selon une mise en œuvre de l'invention, le seuil de couple transmis à l'état ouvert est déterminé à partir d'une cartographie qui dépend d'une température estimée de l'embrayage de changement de rapport de vitesse et/ou d'une température d'huile de la boîte de vitesses.

Selon une mise en œuvre de l'invention, la boîte de vitesses étant une boîte de vitesses à double embrayages, ledit procédé comporte une étape d'ouverture des deux embrayages de la boîte de vitesses.

Selon une mise en œuvre de l'invention, une fois que le moteur thermique a été redémarré par la machine électrique tournante, ledit procédé comporte une étape d'inhibition de l'arrêt du moteur thermique.

L'invention a également pour objet une architecture de contrôle caractérisée en ce qu'elle comporte une pluralité de calculateurs aptes à mettre en œuvre un procédé de pilotage d'une chaîne de traction tel que précédemment défini.

L'invention sera mieux comprise à la lecture de la description qui suit et à l'examen des figures qui l'accompagnent. Ces figures ne sont données qu'à titre illustratif mais nullement limitatif de l'invention.
[Fig. 1] La figure 1 est une représentation schématique d'une chaîne de traction hybride d'un véhicule automobile mettant en œuvre un procédé selon l'invention de démarrage du moteur thermique d'une chaîne de traction hybride dans le cas d'une situation de vie dysfonctionnelle;
[Fig. 2] La figure 2 est un diagramme des étapes du procédé selon l'invention de démarrage du moteur thermique d'une chaîne de traction hybride dans le cas d'une situation de vie dysfonctionnelle.

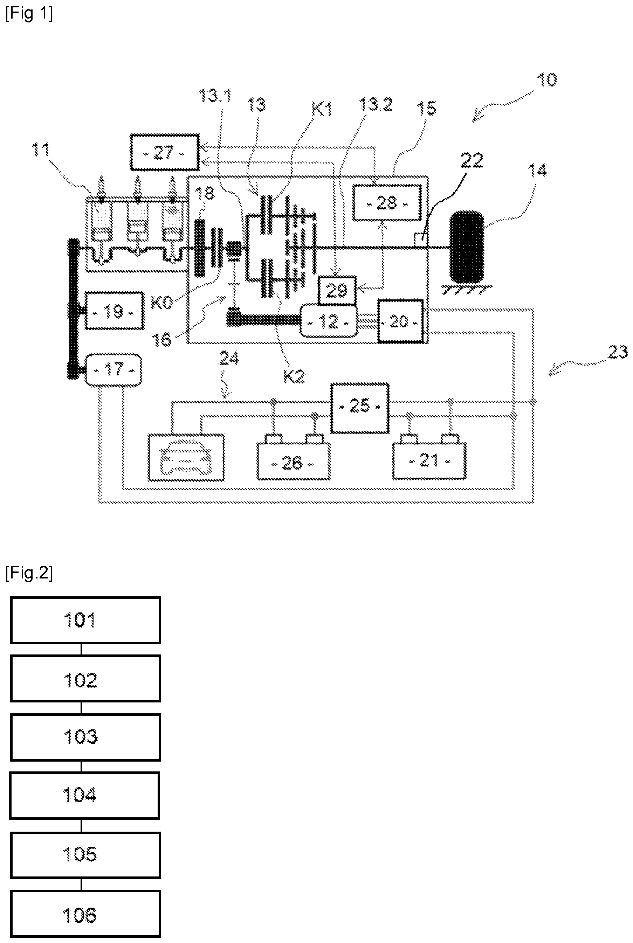

La figure 1 montre une chaîne de traction hybride 10 de véhicule automobile comportant un moteur thermique 11 associé à un volant d'inertie 18 et une machine électrique tournante 12 montés sur un train de roues 14, notamment un train de roues avant.

La machine électrique 12 est disposée en entrée d'une boîte de vitesses 13 à double embrayages comportant deux embrayages K1, K2 de changement de rapport de vitesse. Un arbre de sortie 13.2 de la boîte de vitesses 13 est relié aux roues par l'intermédiaire d'un différentiel et d'une descente de pont (non représentés).

En outre, un embrayage K0 de connexion et de déconnexion du moteur thermique 11 est apte à sélectivement connecter le moteur thermique 11 à l'arbre d'entrée 13.1 de la boîte de vitesses 13 lorsque ledit embrayage K0 est à l'état fermé et à isoler le moteur thermique 11 par rapport à l'arbre d'entrée 13.1 de la boîte de vitesses 13 lorsque ledit embrayage K0 est à l'état ouvert.

A cet effet, l'embrayage K0 est disposé entre le moteur thermique 11 et la machine électrique tournante 12. L'isolation du moteur thermique 11 par rapport à l'arbre d'entrée 13.1 de la boîte de vitesses 13 et donc par rapport aux roues est requise notamment lorsque le véhicule fonctionne dans un mode de roulage électrique pur.

La machine électrique tournante 12 est montée entre l'embrayage K0 et les embrayages K1, K2 de changement de rapport de la boîte de vitesses 13. La machine électrique tournante 12 pourra être connectée sur l'arbre d'entrée 13.1 de la boîte de vitesses 13 par l'intermédiaire d'un ensemble réducteur 16 à engrenages ou à courroie.

La machine électrique tournante 12 est apte à transformer une énergie électrique issue d'une batterie 21 en une énergie mécanique pour assurer une traction du véhicule. La machine électrique tournante 12 est également apte à fonctionner dans un mode générateur dans lequel la machine électrique tournante 12 transforme une énergie mécanique en une énergie électrique permettant de recharger la batterie 21, notamment lors d'une phase de freinage récupératif.

L'ensemble formé par la machine électrique tournante 12, la boîte de vitesses 13, ainsi que les embrayages K1, K2 de changement de rapport de vitesse, et l'embrayage K0 de connexion et de déconnexion du moteur thermique 11 pourra être intégré à l'intérieur d'un dispositif de transmission électrique 15 constituant un composant indépendant de la chaîne de traction 10. Ce dispositif de transmission électrique 15 pourra comporter un dispositif de frein de parking 22, dit "park lock" en anglais, apte à assurer un blocage des roues lorsque le véhicule est garé à l'arrêt. Ce dispositif 22 est apte à prendre une position engagée dans laquelle le dispositif 22 bloque les roues du véhicule et une position désengagée dans laquelle le dispositif 22 libère les roues du véhicule.

Le moteur thermique 11 est associé à une machine électrique tournante réversible 17 dite "alterno-démarreur". L'alterno-démarreur 17 est configuré comme étant l'organe de démarrage par défaut du moteur thermique 11. L'alterno-démarreur 17 pourra être accouplé avec le moteur thermique 11 en façade accessoires par l'intermédiaire d'un dispositif de transmission à poulie et courroie. Une pompe à vide 19 permet d'assurer l'assistance de freinage.

L'alterno-démarreur 17 pourra notamment assurer le redémarrage du moteur thermique 11 dans le cadre d'une stratégie d'arrêt et de redémarrage du moteur thermique 11 en fonction des conditions de circulation (stratégie dite STT pour "stop and start" en anglais). L'alterno-démarreur 17 pourra participer ou non à la récupération d'énergie lors d'un freinage récupératif.

La machine électrique tournante 12 associée à un convertisseur AC-DC 20, l'alterno-démarreur 17, ainsi que la batterie 21 font partie d'un réseau électrique moyenne tension 23, notamment un réseau 48 Volts. Le réseau électrique moyenne tension 23 est interconnecté avec un réseau électrique basse tension 24, notamment un réseau 12 Volts, par l'intermédiaire d'un convertisseur DC-DC 25. Le réseau électrique basse tension 24, qui comporte une batterie référencée 26, est le réseau de bord du véhicule automobile.

L'architecture de contrôle de la chaîne de traction 10 comporte une pluralité de calculateurs, à savoir un calculateur 27 de supervision de la chaîne de traction, un calculateur 28 de supervision du dispositif de transmission électrique, et un calculateur 29 de supervision de la machine électrique tournante. Ces calculateurs 27, 28, 29 sont aptes à mettre en œuvre le procédé de pilotage de la chaîne de traction selon l'invention. Les étapes de ce procédé sont décrites ci-après en référence avec la figure 2.

Dans une étape 101, le calculateur 27 de supervision de la chaîne de traction détecte une situation de vie dysfonctionnelle dans laquelle le moteur thermique 11 est à l'arrêt et l'embrayage K0 de connexion et de déconnexion du moteur thermique est bloqué à l'état fermé.

L'embrayage K0 est détecté comme étant bloqué à l'état fermé, lorsque le couple transmis estimé de l'embrayage K0 (émis par le calculateur 28 de supervision du dispositif de transmission) est supérieur ou égal à un seuil de couple transmis à l'état fermé. Le seuil de couple transmis à l'état fermé est déterminé à partir d'une cartographie qui dépend d'une température estimée de l'embrayage K0 et/ou d'une température d'huile de la boîte de vitesses 13.

Dans une étape 102, l'organe de redémarrage est reconfiguré en abandonnant l'alterno-démarreur 17 au profit de la machine électrique tournante 12.

La reconfiguration de l'organe de redémarrage est demandée lorsque les conditions suivantes sont réunies pendant une durée de confirmation calibrable:
- le moteur thermique 11 est à l'arrêt dans le cadre d'une mise en œuvre d'une stratégie d'arrêt et de redémarrage automatique dudit moteur thermique 11,
- aucune demande de figeage d'un état du moteur thermique 11 en phase d'arrêt pour un besoin de manœuvre n'a été émise,
- aucune demande d'inhibition de la stratégie d'arrêt et de redémarrage automatique du moteur thermique 11 pour des besoins de sécurité n'a été émise,
- le calculateur 28 de supervision du dispositif de transmission électrique 15 n'autorise pas un redémarrage du moteur thermique 11, et
- le dispositif de frein de parking 22 se trouve dans une position stable, c'est-à-dire une position confirmée comme étant une position engagée ou une position confirmée comme étant une position désengagée.

Le procédé comporte en outre une étape 103 d'ouverture des embrayages K1, K2 de changement de rapport de vitesse. A cet effet, le calculateur 27 de supervision de la chaîne de traction 10 demande la mise au neutre du dispositif de transmission électrique 15 en envoyant au calculateur 28 de supervision du dispositif de transmission électrique 15 une consigne de couple transmissible nulle aux embrayages K1 et K2.

Avantageusement, le procédé comporte une étape 104 de vérification que les embrayages K1, K2 de changement de rapport de vitesse sont bien ouverts en vérifiant que le couple transmis estimé de l'embrayage K1 de changement de rapport de vitesse (émis par le calculateur 28 de supervision du dispositif de transmission électrique 15) est inférieur ou égal à un seuil de couple transmis à l'état ouvert (calculé par le calculateur 27 de supervision de la chaîne de traction). Le seuil de couple transmis à l'état ouvert est déterminé à partir d'une cartographie qui dépend de la température estimée de l'embrayage K1 et/ou d'une température d'huile de la boîte de vitesses 13. Ces informations sont émises par le calculateur 27 de supervision du dispositif de transmission électrique 15.

De même, on vérifie que le couple transmis estimé de l'embrayage K2 de changement de rapport de vitesse (émis par le calculateur 28 de supervision du dispositif de transmission électrique 15) est inférieur ou égal à un seuil de couple transmis à l'état ouvert (calculé par le calculateur 27 de supervision de la chaîne de traction 10). Le seuil de couple transmis à l'état ouvert est déterminé à partir d'une cartographie qui dépend de la température estimée de l'embrayage K2 et/ou d'une température d'huile de la boîte de vitesses 13. Ces informations sont émises par le calculateur 27 de supervision du dispositif de transmission électrique 15.

Le procédé comporte également une étape 105 de pilotage de la machine électrique tournante 12 pour assurer le démarrage du moteur thermique 11. Du fait de la liaison mécanique entre la machine électrique tournante 12 et le moteur thermique 11 via l'embrayage K0 à l'état fermé, la machine électrique tournante 12 pourra entraîner en rotation le moteur thermique 12 jusqu'à ce que ce dernier atteigne son régime d'autonomie situé aux alentours de 600 tours/min.

Une fois que le moteur thermique 11 a été redémarré, ledit procédé comporte une étape 106 d'inhibition de l'arrêt du moteur thermique 11. Etant donné que l'embrayage K0 est bloqué à l'état fermé, on évite ainsi de se retrouver dans une nouvelle situation dysfonctionnelle analogue à celle qui a été résolue précédemment.

En variante, l'invention pourra également être mise en œuvre avec une boîte de vitesses 13 à simple embrayage. L'étape 103 consiste alors en l'ouverture d'un seul embrayage.

## Revendications

1. Procédé de pilotage d'une chaîne de traction hybride (10) de véhicule automobile comportant:
- un moteur thermique (11) associé à un alterno-démarreur (17) constituant un organe de démarrage par défaut dudit moteur thermique (11), et
- une machine électrique tournante (12),
- une boîte de vitesses (13) comportant au moins un embrayage (K1, K2) de changement de rapport de vitesse, ladite boîte de vitesses (13) comportant un arbre d'entrée (13.1) auquel est connecté mécaniquement ladite machine électrique tournante (12) et un arbre de sortie (13.2) relié à des roues du véhicule automobile,
- un embrayage (K0) de connexion et de déconnexion du moteur thermique, **caractérisé en ce que** ledit procédé comporte:
- une étape de détection d'une situation de vie dysfonctionnelle dans laquelle le moteur thermique (11) est à l'arrêt et l'embrayage (K0) de connexion et de déconnexion du moteur thermique (11) est bloqué à l'état fermé,
- une étape de reconfiguration de l'organe de démarrage en abandonnant l'alterno-démarreur (17) au profit de la machine électrique tournante (12),
- une étape d'ouverture de l'embrayage de changement de rapport de vitesse (K1, K2), et
- une étape de pilotage de la machine électrique tournante (12) pour assurer le démarrage du moteur thermique (11).

2. Procédé selon la revendication 1, **caractérisé en ce que** l'embrayage (K0) de connexion et de déconnexion du moteur thermique est détecté comme étant bloqué à l'état fermé, lorsque le couple transmis estimé par ledit embrayage (K0) est supérieur ou égal à un seuil de couple transmis à l'état fermé.

3. Procédé selon la revendication 2, **caractérisé en ce que** le seuil de couple transmis à l'état fermé est déterminé à partir d'une cartographie qui dépend d'une température estimée de l'embrayage (K0) de connexion et de déconnexion du moteur thermique et/ou d'une température d'huile de la boîte de vitesses (13).

4. Procédé selon l'une quelconque des revendications 1 à 3, **caractérisé en ce que** la reconfiguration de l'organe de redémarrage est demandée lorsque les conditions suivantes sont réunies:
- le moteur thermique (11) est à l'arrêt dans le cadre d'une mise en œuvre d'une stratégie d'arrêt et de redémarrage automatique dudit moteur thermique (11),
- aucune demande de figeage d'un état du moteur thermique (11) en phase d'arrêt pour un besoin de manœuvre n'a été émise,
- aucune demande d'inhibition de la stratégie d'arrêt et de redémarrage automatique du moteur thermique (11) pour des besoins de sécurité n'a été émise
- un calculateur (28) de supervision d'un dispositif de transmission électrique (15) n'autorise pas un redémarrage du moteur thermique (11), et
- un dispositif de frein de parking (22) se trouve dans une position stable.

5. Procédé selon la revendication 4, **caractérisé en ce que** les conditions doivent être réunies pendant une durée de confirmation calibrable.

6. Procédé selon l'une quelconque des revendications 1 à 5, **caractérisé en ce qu'**il comporte une étape de vérification que l'embrayage (K1, K2) de changement de rapport de vitesse est dans un état ouvert en vérifiant qu'un couple transmis estimé de l'embrayage (K1, K2) de changement de rapport de vitesse est inférieur ou égal à un seuil de couple transmis à l'état ouvert.

7. Procédé selon la revendication 6, **caractérisé en ce que** le seuil de couple transmis à l'état ouvert est déterminé à partir d'une cartographie qui dépend d'une température estimée de l'embrayage (K1, K2) de changement de rapport de vitesse et/ou d'une température d'huile de la boîte de vitesses (13).

8. Procédé selon l'une quelconque des revendications 1 à 7, **caractérisé en ce que** la boîte de vitesses (13) étant une boîte de vitesses à double embrayages, ledit procédé comporte une étape d'ouverture des deux embrayages (K1, K2) de la boîte de vitesses (13).

9. Procédé selon l'une quelconque des revendications 1 à 8, **caractérisé en ce que** une fois que le moteur thermique (11) a été redémarré par la machine électrique tournante (12), ledit procédé comporte une étape d'inhibition de l'arrêt du moteur thermique (11).

10. Architecture de contrôle **caractérisée en ce qu'**elle comporte une pluralité de calculateurs (27, 28, 29) aptes à mettre en œuvre un procédé de pilotage d'une chaîne de traction tel que défini selon l'une quelconque des revendications précédentes.

## Patentansprüche

1. Verfahren zur Steuerung eines Hybridantriebs (10) eines Kraftfahrzeuges mit:
- einem Verbrennungsmotor (11) zugeordnet ist, der einem Motorgenerator (17) zugeordnet ist, der ein Standardstartglied des Verbrennungsmotors (11) bildet, und
- einer rotierenden elektrischen Maschine (12),
- ein Getriebe (13) mit mindestens einer Schaltkupplung (K1, K2), wobei das Getriebe (13) eine Eingangswelle (13.1), mit der die rotierende elektrische Maschine (12) mechanisch verbunden ist, und eine Ausgangswelle (13.2) aufweist, die mit Rädern des Kraftfahrzeugs verbunden ist,
- eine Kupplung (K0) zum An- und Abkuppeln des Verbrennungsmotors,
**dadurch gekennzeichnet, dass** das Verfahren umfasst:
- einen Schritt zur Erfassung einer funktionsgestörten Lebenssituation, in der der Verbrennungsmotor (11) ausgeschaltet ist und die Ein- und Auskupplung (K0) des Verbrennungsmotors (11) im geschlossenen Zustand gesperrt ist,
- einen Schritt zur Neukonfiguration der Anlassvorrichtung durch Abschaltung des Motorgenerators (17) zugunsten der rotierenden elektrischen Maschine (12),
- ein Schritt zum Öffnen der Schaltkupplung (K1, K2) und
- ein Ansteuerschritt der rotierenden elektrischen Maschine (12) zum Anfahren des Verbrennungsmotors (11).

2. Verfahren nach Anspruch 1, **dadurch gekennzeichnet, dass** die Kupplung (K0) zum An- und Abkuppeln des Verbrennungsmotors als im geschlossenen Zustand blockiert erfasst wird, wenn das von der Kupplung (K0) geschätzte übertragene Drehmoment größer oder gleich einer Schwelle des im geschlossenen Zustand übertragenen Drehmoments ist.

3. Verfahren nach Anspruch 2, **dadurch gekennzeichnet, dass** der im geschlossenen Zustand übertragene Drehmomentschwellenwert aus einer Abbildung bestimmt wird, die von einer geschätzten Temperatur der Ein- und Auskupplung (K0) des Verbrennungsmotors und/oder einer Öltemperatur des Getriebes (13) abhängt.

4. Verfahren nach einem der Ansprüche 1 bis 3, **dadurch gekennzeichnet, dass** die Rekonfiguration des Neustartgliedes angefordert wird, wenn die folgenden Bedingungen erfüllt sind:
- der Verbrennungsmotor (11) im Rahmen einer Umsetzung einer Strategie zum automatischen Stoppen und Wiederanfahren des Verbrennungsmotors (11) stillsteht,
- kein Antrag auf Stilllegung eines aus Rangiergründen ausgeschalteten Zustands des Verbrennungsmotors (11) gestellt wurde,
- Es wurde kein Antrag auf Unterdrückung der Strategie zum automatischen Abstellen und Neustarten des Verbrennungsmotors (11) aus Sicherheitsgründen gestellt
- ein Rechner (28) zur Überwachung einer elektrischen Übertragungseinrichtung (15) ein Neustarten des Verbrennungsmotors (11) nicht zulässt und
- eine Feststellbremsvorrichtung (22) in einer stabilen Lage ist.

5. Verfahren nach Anspruch 4, **dadurch gekennzeichnet, dass** die Bedingungen während einer kalibrierbaren Bestätigungszeit erfüllt sein müssen.

6. Verfahren nach einem der Ansprüche 1 bis 5, **dadurch gekennzeichnet, dass** es einen Schritt umfasst, in dem überprüft wird, ob die Schaltkupplung (K1, K2) in einem offenen Zustand ist, indem überprüft wird, ob ein geschätztes übertragenes Drehmoment der Schaltkupplung (K1, K2) kleiner oder gleich einem Schwellwert des übertragenen Drehmoments in dem offenen Zustand ist.

7. Verfahren nach Anspruch 6, **dadurch gekennzeichnet, dass** die im offenen Zustand übertragene Drehmomentschwelle aus einer Abbildung ermittelt wird, die von einer geschätzten Temperatur der Schaltkupplung (K1,K2) und/oder einer Öltemperatur des Getriebes (13) abhängt.

8. Verfahren nach einem der Ansprüche 1 bis 7, **dadurch gekennzeichnet, dass** das Getriebe (13) ein Doppelkupplungsgetriebe ist, wobei das Verfahren einen Schritt des Öffnens der beiden Kupplungen (K1, K2) des Getriebes (13) umfasst.

9. Verfahren nach einem der Ansprüche 1 bis 8, **dadurch gekennzeichnet, dass** das Verfahren, nachdem der Verbrennungsmotor (11) durch die rotierende elektrische Maschine (12) neu gestartet wurde, einen Schritt des Unterdrückens des Stillstands des Verbrennungsmotors (11) umfasst.

10. Steuerarchitektur, **dadurch gekennzeichnet, dass** sie eine Vielzahl von Rechnern (27, 28, 29) umfasst, die geeignet sind, ein Verfahren zur Steuerung eines Antriebsstrangs, wie er in einem der vorhergehenden Ansprüche definiert ist, durchzuführen.

## Claims

1. Method for controlling a hybrid traction chain (10) of a motor vehicle comprising:
an internal combustion engine (11) associated with an alternator-starter (17) constituents a default starter member of said internal combustion engine (11), and
a rotating electrical machine (12),
gearbox (13) comprising at least one gear report change clutch (K1, K2), said gearbox (13) comprising an entry shaft (13. 1) to which said rotary electrical machine (12) is mechanically connected and an output shaft (13. 2) connected to wheels of the motor vehicle,
a clutch (K 0) for connecting and disconnecting the heat engine,
**characterised in that** said method comprises:
step of detecting a dysfunctional life situation in which the heat engine (11) is in the shutdown and the clutch (K0) for connecting and disconnecting the heat engine (11) is hold up in the closed status,
step of reconfiguring the starting member by abandoning the alternator-starter (17) in favour of the rotary electrical machine (12),
step of opening the gear report change clutch (K1, K2), and
step of controlling the rotary electrical machine (12) to ensure the starting of the heat engine (11).

2. Method according to claim 1, wherein the clutch (K0) for connecting and disconnecting the heat engine is detected as being hold up to the on status, when the torque transmitted estimated by said clutch (K0) is greater than or equal to a torque threshold transmitted to the on status.

3. Method according to claim 2, wherein the torque threshold transmitted in the closed status is determined from a map which depends on an estimated temperature of the clutch (K0) for connecting and disconnecting the heat engine and/or an oil temperature of the gearbox (13).

4. Method according to any one of claims 1 to 3, wherein the reconfiguration of the restarting member is ordered when the following conditions are met:
the heat engine (11) is in the shutdown within the framework of an implementation of a strategy of automatic shutdown and restarting of said heat engine (11),
- no demand for freezing a status of the heat engine (11) in the stopping phase for a manoeuvring demand has been emitted,
- no demand for inhibiting the shutdown and automatic restarting of the heat engine (11) for safety demands has been issued
computer (28) for supervising an electrical transmission device (15) does not allow the thermal engine (11) to be restarted, and a parking brake device (22) is in a steady position.

5. Method as claimed in claim 4, wherein the conditions must be met during a calibrateable confirmation period.

6. Method according to any one of claims 1 to 5, **characterised in that** it comprises a step of checking that the gear report change clutch (K1, K2) is in an open status by checking that an estimated transmitted torque of the gear report change clutch (K1, K2) is less than or equal to a torque threshold transmitted to the open status.

7. Method according to claim 6, wherein the torque threshold transmitted to the open status is determined from a map that depends on an estimated temperature of the gear report change clutch (K1, K2) and/or an oil temperature of the gearbox (13).

8. Method according to any one of Claims 1 to 7, **characterised in that** the gearbox (13) being a double-clutch gearbox, said method comprises a step of opening the two clutches (K1, K2) of the gearbox (13).

9. Method according to any one of Claims 1 to 8, **characterised in that** once the heat engine (11) has been restarted by the rotating electrical machine (12), said method comprises a step of inhibiting the shutdown of the heat engine (11).

10. Control architecture comprising a plurality of computers (27, 28, 29) capable of implementing a method for controlling a traction chain as defined according to any one of the previous claims.
